# EUROPÄISCHE PATENTSCHRIFT

(11) **EP 0 842 822 B1**
(45) Veröffentlichungstag und Bekanntmachung des Hinweises auf die Patenterteilung: **21.04.2004**
(21) Anmeldenummer: 97110987.1
(22) Anmeldetag: 02.07.1997
(51) Int. Cl.: B60R 11/02

(54) **Drehknopf**
Rotary knob
Bouton tournant.

(30) Priorität: 19.11.1996 DE 19647722
(43) Veröffentlichungstag der Anmeldung: 20.05.1998
(73) Patentinhaber: ROBERT BOSCH GMBH, 70442 Stuttgart (DE)
(72) Erfinder: Wolkewitz, Klaus, 31141 Hildesheim (DE); Papenberg, Rolf, 31028 Gronau (DE)

(56) Entgegenhaltungen:
- DE-U- 8 231 565
- US-A- 4 993 280
- US-A- 5 430 249

## Beschreibung

### Stand der Technik

Die Erfindung betrifft einen Drehknopf, umfassend ein Betätigungselement und ein mit diesem drehfest verbundenes, auf eine Achse eines drehbaren Schalt-/Steuermittels aufsteckbares Kopplungselement.

Derartige Drehknöpfe werden beispielsweise bei Autoradios o.dgl. eingesetzt. Der Drehknopf befindet sich dabei beispielsweise in einer für ihn vorgesehenen Öffnung in einer Frontplatte des Radios. Die Achse des Schalt-/Steuermittels, beispielsweise eine Potentiometerachse eines Lautstärkereglers, ragt aus dem Innenteil des Gehäuses so weit hervor, daß eine Verbindung mit dem Kopplungselement des Drehknopfes möglich ist.

Da nun das Kopplungselement des Drehknopfes zum einen auf die Achse des Schalt-/Steuermittels aufgesteckt ist, der Drehknopf zum anderen aber in einer dafür vorgesehenen Öffnung in der Frontplatte eines Gehäuses geführt ist, können beispielsweise Verkantungen oder sogar Behinderungen oder Drehbewegungen des Drehknopfes entstehen, wenn die Achse nicht exakt im Zentrum des Kopplungselements angeordnet ist, oder wenn die Achse des Schalt-/Steuermittels leicht verkippt ist und insoweit eine taumelnde Drehbewegung ausführt, oder wenn die Rotationsachse des Betätigungselements und die Achse des Schalt-/Steuermittels nicht exakt kolinear zueinander, sonder parallel versetzt angeordnet sind.

In diesen Fällen führt nämlich das Betätigungselement bei einer Drehbewegung keine runde, sonder eine exzentrische, beispielsweise elliptische Bewegung aus, so dass sich Berührungen des Betätigungselements und der Frontplatte in der für das Betätigungselement in der Frontplatte vorgesehenen Öffnung und infolge davon Reibbewegungen ergeben können.

In extremen Fällen kann die exzentrische Bewegung des gesamten Drehknopfs sogar zu einer Verklemmung des Drehknopfs in der für ihn vorgesehenen Öffnung der Frontplatte führen.

Aus der DE 82 31 565 U1 ist ein den Merkmalen des Oberbegriffs des Anspruchs 1 entsprechender Drehknopf eines in einem Haushaltsgerätegehäuse vorgesehenen Schalt- oder Steuergeräts bekannt. Hierbei ist eine Drehkopfkappe, die einen Drehknebel aufweist, über eine Verrastung mit einem Drehknopfnabendeckel verbunden. Der Drehknopfnabendeckel ist über eine Gleitlagerung mit einem Kardangelenkstück verbunden, das zwischen dem Drehknopfnabendeckel und einer Drehknopfnabe so angeordnet ist, dass entsprechende Quemuten, die an gegenüberliegenden Seiten um 90° versetzt an dem Kardangelenkstück angeordnet sind, eine Verschiebung des Drehknopfnabendeckels gegenüber dem Kardangelenkstück in eine erste Richtung und eine Verschiebung des Kardangelenkstücks gegenüber der Drehknopfnabe in eine senkrecht dazu verlaufende Richtung ermöglichen. An der Drehknopfnabe ist eine Betätigungswelle eines Schalt- oder Steuergeräts angeordnet.

Der Erfindung liegt daher die Aufgabe zugrunde, einen Drehknopf der gattungsgemäßen Art derart zu verbessern, dass für diesen mit technisch einfach zu realisierenden Mitteln ein präziser Rundlauf in der Öffnung einer Gehäuseplatte, beispielsweise einer Frontplatte eines Autoradios o. dgl., bei geringem Platzbedarf gewährleistet ist.

### Vorteile der Erfindung

Diese Aufgabe wird durch einen Drehknopf mit den Merkmalen des Anspruchs 1 gelöst. Das Kopplungselement umfasst einen ersten, in dem Betätigungselement in wenigstens einer ersten radialen Richtung verschieblich angeordneten Gleitstein und einen in dem ersten Gleitstein in einer zweiten zur ersten in einem Winkel angeordneten Richtung verschieblichen, die Achse des Schalt-/Steuermittels aufnehmenden zweiten Gleitstein, wobei der erste Gleitstein in dem Betätigungselement und der zweite Gleitstein in dem ersten Gleitstein angeordnet ist. Durch die erfindungsgemäße Ausbildung von Betätigungselement, erstem und zweitem Gleitstein ist eine besonders platzsparende Ineinanderschachtelung möglich.

Dadurch, dass das Kopplungselement aus zwei Gleitsteinen besteht, deren erster in dem Betätigungselement in wenigstens einer ersten radialen Richtung verschieblich angeordnet ist und deren zweiter in einer zweiten, zur ersten in einem wInkel angeordneten Richtung verschieblich ist, wird auf einfache Weise jegliche exzentrische Bewegung der Achse in dem Betätigungselement ausgeglichen. Dabei wird ein exakter Rundlauf des Betätigungselements auch dann sichergestellt, wenn die Achse des Schalt-/Steuermittels parallel versetzt zur Symmetrieachse des Betätigungselements angeordnet ist, wenn die Achse des Schalt-/Steuermittels leicht verkippt zur Symmetrieachse des Betätigungsmittels angeordnet ist, oder wenn die Achse des Schalt-/Steuermittels beispielsweise durch eine leichte Biegung der Achse eine exzentrische Bewegung ausführt.

Durch die ineinander angeordneten Gleitsteine, die jeweils in zueinander im Winkel angeordneten radialen Richtung gleiten können, können derartige Bewegungen der Achse des Schalt-/Steuermittels effektiv kompensiert werden, ohne daß die Lagerung des Betätigungselements in der Gehäuseplatte in irgendeiner Weise beeinflußt wird.

Hinsichtlich der Ausbildung des Betätigungselements wie auch der beiden Gleitsteine sind die unterschiedlichsten Ausführungsformen denkbar.

Eine vorteilhafte Ausführungsform sieht vor, daß das Betätigungselement als einseitig offener Hohlzylinder ausgebildet ist, der an seiner inneren Peripherie zwei Vorsprünge aufweist. Hierdurch wird auf sehr vorteilhafte Weise eine besonders kompakte Bauweise ermöglicht, da die Gleitsteine in dem Inneren des Hohlzylinders angeordnet werden können. Durch die Vorsprünge wird die Drehmitnahme eines der beiden Gleitsteine auf unten noch näher zu beschreibende Weise ermöglicht.

Hinsichtlich der Ausbildung des ersten und des zweiten Gleitsteins sind ebenfalls die unterschiedlichsten Ausführungsformen denkbar.

Eine vorteilhafte Ausführungsform sieht vor, daß der erste Gleitstein im wesentlichen als einseitig offener Hohlzylinder ausgebildet ist, dessen Außendurchmesser kleiner ist als der Innendurchmesser des Betätigungselements und in dessen Zylindermantel jeweils zwei sich gegenüberliegende, im Winkel zueinander angeordnete Öffnungen vorgesehen sind, in deren zwei die Vorsprünge des Betätigungselements eingreifen.

Um eine optimale Zusammenwirkung von erstem und zweitem Gleitstein zu ermöglichen, ist vorteilhafterweise vorgesehen, daß der zweite Gleitstein ebenfalls als Zylinder ausgebildet ist, dessen Außendurchmesser kleiner ist als der Innendurchmesser des ersten Gleitsteins mit einer axial verlaufenden Aufnahme für die Achse des Schalt-/Steuermittels und mit an seiner äußeren Peripherie angeordneten Nasen, die in zwei der sich paarweise gegenüberliegenden Öffnung des ersten Gleitelements eingreifen.

Da der Außendurchmesser des ersten Gleitsteins kleiner ist als der Innendurchmesser des Betätigungselements und da der Außendurchmesser des zweiten Gleitsteins kleiner ist als der Innendurchmesser des ersten Gleitsteins, wird ermöglicht, daß der erste Gleitstein im Betätigungselement und der zweite Gleitstein im ersten Gleitstein Gleitbewegungen in Radialrichtung ausführen können. Durch die Vorsprünge des Betätigungselements, die in zwei Öffnungen des ersten Gleitsteins eingreifen und durch die Nasen des zweiten Gleitsteins, die in die beiden anderen im Winkel zu den ersten Öffnungen vorgesehenen Öffnungen eingreifen, wird dabei gleichzeitig sichergestellt, daß die Achse des Schalt-/Steuermittels bei einer Drehung des Betätigungselements drehfest mitgenommen wird.

Rein prinzipiell kann der Winkel zwischen den sich jeweils gegenüberliegenden Öffnungen des ersten Gleitsteins unterschiedliche Werte aufweisen. Besonders vorteilhaft ist es jedoch, wenn der Winkel im wesentlichen 90° beträgt. Hierdurch wird eine besonders optimale Kopplung des Betätigungselements an die Achse des Schalt-/Steuermittels gewährleistet.

Die Lagerung des Betätigungselements in der Gehäuseplatte kann auf die unterschiedlichste Art und Weise ausgebildet sein. Eine vorteilhafte Ausführungsform sieht vor, daß an dem äußeren Umfang des Zylindermantels des Betätigungselements eine radial umlaufende Nut vorgesehen ist, die in einem komplementär zu ihr ausgebildeten, an der Gehäuseöffnung angeordneten Vorsprung eingreift.

### Zeichnung

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine geschnittene Darstellung eines Betätigungselements eines erfindungsgemäßen Drehknopfs;
- Fig. 2: eine Unteransicht eines Betätigungselements eines erfindungsgemäßen Drehknopfs;
- Fig. 3: schematisch eine Seitenansicht eines ersten Gleitsteins eines erfindungsgemäßen Drehknopfs;
- Fig. 4: eine Draufsicht eines ersten Gleitsteins eines erfindungsgemäßen Drehknopfs;
- Fig. 5: schematisch eine Seitenansicht eines zweiten Gleitsteins eines erfindungsgemäßen Drehknopfs und
- Fig. 6: eine Unteransicht eines zweiten Gleitsteins eines erfindungsgemäßen Drehknopfs.

### Beschreibung der Ausführungsbeispiele

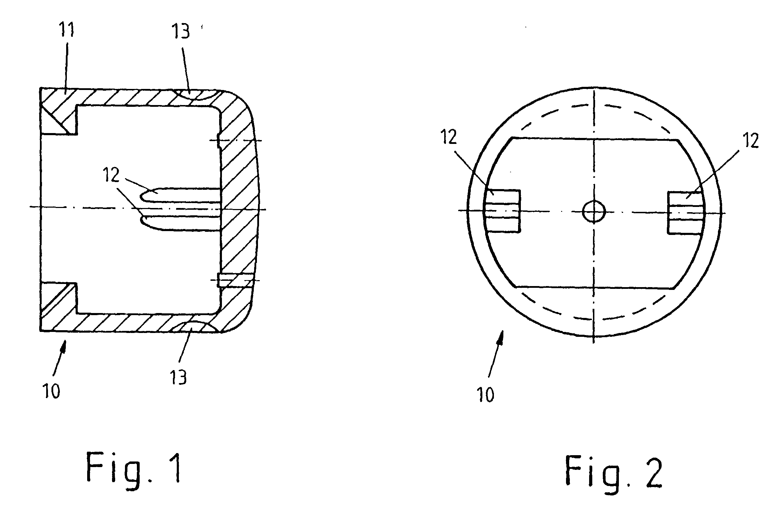

Ein Ausführungsbeispiel eines Betätigungselements 10, dargestellt in Fig. 1 und Fig. 2, ist als einseitig offener Hohlzylinder 11 ausgebildet. In der inneren Peripherie des Hohlzylinders 11 sind zwei Vorsprünge 12 angeformt.

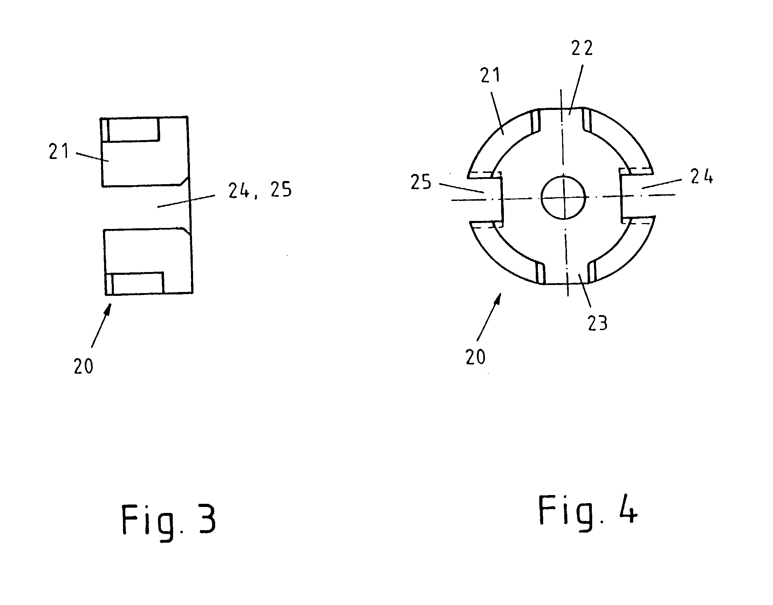

Ein als Ganzer mit 20 bezeichneter erster Gleitstein, dargestellt in Fig. 3 und Fig. 4, ist ebenfalls als einseitig offener Hohlzylinder 21 ausgebildet, dessen Außendurchmesser kleiner ist als der Innendurchmesser des Betätigungselements 10. In dem Zylindermantel des Hohlzylinders 21 sind jeweils zwei der sich gegenüberliegenden Öffnungen 22, 23 und 24, 25 vorgesehen. Jeweils zwei sich gegenüberliegende Öffnungen 22, 23 sowie 24, 25 sind derart kreuzweise angeordnet, daß jeweils benachbarte Öffnungen um 90° zueinander versetzt angeordnet sind.

Der erste Gleitstein 20 wird so in das Innere des einseitig offenen Zylinders 11 des Betätigungselements 10 eingesetzt, daß dessen Vorsprünge 12 in zwei sich einander gegenüberliegenden Öffnungen 22, 23 oder 24, 25 des ersten Gleitsteins 20 eingreifen. Hierdurch wird zum einen eine drehfeste Mitnahme des ersten Gleitsteins 20 in dem Betätigungselement 10 ermöglicht, zum anderen wird dadurch, daß der Außendurchmesser des ersten Gleitsteins 20 kleiner ist als der Innendurchmesser des Betätigungselements 10 ermöglicht, daß der Gleitstein 20 in dem Inneren des Betätigungselements 10 in Richtung der die beiden einander gegenüberliegenden Öffnungen 22, 23 oder 24, 25, in die jeweils die Vorsprünge 12 eingreifen, radial frei verschieblich ist.

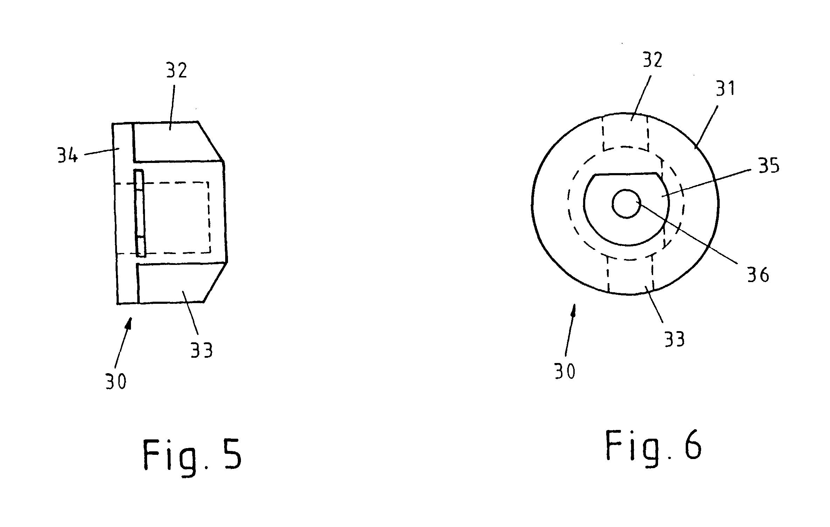

In den ersten Gleitstein 20 wird ein zweiter Gleitstein 30, dargestellt in den Fig. 5 und 6, eingefügt.

Der zweite Gleitstein 30 ist ebenfalls als Zylinder 21 ausgebildet, dessen Außendurchmesser kleiner ist als der Innendurchmesser des ersten Gleitsteins 20. Der zweite Gleitstein weist an seinem äußeren Umfang zwei Nasen 32, 33 auf, die an einer Stirnseite des Gleitsteins 30 in einen Flansch 34 übergehen, dessen Außendurchmesser im wesentlichen dem Außendurchmesser des ersten Gleitsteins 20 entspricht. Auf der Seite des Flansches 34 ist eine Öffnung 35 vorgesehen, die komplementär zu der Achsform eines beispielsweise Potentiometers oder sonstigen Schalt- und Steuermittels ausgebildet ist. Die Sackbohrung weist auf ihrer dem Flansch 34 abgewandten Seite eine zentral angeordnete, durchgängige Bohrung 36 kleineren Durchmessers auf, die lediglich herstellungsbedingt und nicht erforderlich ist.

Der zweite Gleitstein 30 wird nun in den ersten Gleitstein 20 derart eingefügt, daß seine beiden Nasen 32, 33 in zwei der sich gegenüberliegenden Öffnungen 22, 23 oder 24, 25 eingreifen.

Es versteht sich, daß die Nasen nur dann in die Öffnungen 22, 23 eingreifen, wenn die Vorsprünge 12 des Betätigungselements 10 in die Öffnungen 24, 25 eingreifen und daß umgekehrt die Nasen 32, 33 nur dann in die Öffnungen 24, 25 eingreifen, wenn die Vorsprünge 12 des Betätigungselements 10 in die Öffnungen 22, 23 eingreifen, oder mit anderen Worten, die Nasen 32, 33 und die Vorsprünge 12 des Betätigungselements 10 greifen immer wechselseitig in die Öffnungen des ersten Gleitsteins 20 ein.

Da der Außendurchmesser des zweiten Gleitsteins 30 kleiner ist als der Innendurchmesser des Zylinders 21 des ersten Gleitsteins 20 wird ermöglicht, daß der zweite Gleitstein 30 zum einen wegen des Eingriffs seiner Nasen 32, 33 in zwei sich gegenüberliegende Öffnungen 22, 23 oder 24, 25 zum einen drehfest von dem ersten Gleitstein 20 mitgenommen wird, zum anderen aber eine in Richtung der beiden Öffnungen, in die seine beiden Nasen 32, 33 eingreifen eine radiale Gleitbewegung ausführen kann. Diese radiale Gleitbewegung des zweiten Gleitsteins 30 ist senkrecht gerichtet zu der radialen Gleitbewegung des ersten Gleitsteins 20 in dem Betätigungselement 10.

Durch das Zusammenwirken des Betätigungselements 10, des ersten Gleitsteins 20 sowie des zweiten Gleitsteins 30 im montierten Zustand wird nun ermöglicht, daß bei einem durch die radial umlaufende Ausnehmung 13, die in einen komplementär zu ihr ausgebildeten Vorsprung an einer (nicht dargestellten) Gehäuseplatte eingreift, gehäusefest gelagerten Betätigungsknopf 10 ein präziser Rundlauf gewährleistet ist, selbst wenn beispielsweise eine (nicht dargestellte) Achse eines Potentiometers zur Symmetrieachse des Betätigungsknopfes 10 leicht versetzt oder verkippt ist oder auf andere Weise einen unrunden, z.B. exzentrischen Lauf aufweist. Es wird vielmehr durch diese Anordnung aus Betätigungselement 10, erstem Gleitstein 20 und zweitem Gleitstein 30 ein eventueller unrunder Lauf einer Achse eines beispielsweise Potentiometers bei gleichzeitiger präziser Drehmitnahme durch das Betätigungselement 10 kompensiert.

Dabei sind die einzelnen Teile des Drehknopfes, nämlich das Betätigungselement 10, der erste Gleitstein 20 sowie der zweite Gleitstein 30 auf besonders einfache Weise herstellbar. Die Teile können beispielsweise Kunststoffspritzgußteile sein.

## Patentansprüche

1. Drehknopf, umfassend ein in einem Gehäuse drehbeweglich gelagertes Betätigungselement (10) und ein mit diesem drehfest verbundenes, auf eine Achse eines Schalt-/Steuermittels aufsteckbares Kopplungselement (20, 30), wobei das Kopplungselement einen ersten, in dem Betätigungselement (10) in wenigstens einer ersten radialen Richtung verschieblich angeordneten Gleitstein (20) und einen mit diesem verbindbaren, in einer zweiten radialen Richtung, die zu der ersten radialen Richtung in einem Winkel angeordnet ist, verschiebbaren, die Achse des Schalt-/Steuermittels aufnehmenden zweiten Gleitstein (30) umfasst, wobei der erste Gleitstein (20) in dem Betätigungselement (10) angeordnet ist, **dadurch gekennzeichnet, dass** der zweite Gleitstein (30) in dem ersten Gleitstein (20) angeordnet ist.

2. Drehknopf nach Anspruch 1, **dadurch gekennzeichnet, daß** das Betätigungselement (10) als einseitig offener Hohlzylinder (11) ausgebildet ist, der an seiner inneren Peripherie zwei Vorsprünge (12) aufweist.

3. Drehknopf nach Anspruch 1 oder 2, **dadurch gekennzeichnet, daß** der erste Gleitstein (20) als einseitig offener Hohlzylinder (21) ausgebildet ist, dessen Außendurchmesser kleiner ist als der Innendurchmesser des Betätigungselements (10) und in dessen Zylindermantel jeweils zwei unter Einschluß eines Winkels sich gegenüberliegende Öffnungen (22, 23; 24, 25) vorgesehen sind, deren zwei sich gegenüberliegende in die Vorsprünge (12) des Betätigungselements (10) eingreifen.

4. Drehknopf nach einem der voranstehenden Ansprüche, **dadurch gekennzeichnet, daß** der zweite Gleitstein (30) als Zylinder (31) ausgebildet ist, dessen Außendurchmesser kleiner ist als der Innendurchmesser des ersten Gleitsteins (20), mit einer axial verlaufenden Aufnahme (35) für die Achse des Schalt-/Steuermittels und mit an seiner äußeren Peripherie angeordneten Nasen (32, 33), die in zwei der sich paarweise gegenüberliegenden Öffnungen (22, 23; 24, 25) des ersten Gleitelements (20) eingreifen.

5. Drehknopf nach einem der voranstehenden Ansprüche, **dadurch gekennzeichnet, daß** der Winkel zwischen den sich jeweils gegenüberliegenden Öffnungen (22, 23; 24, 25) des ersten Gleitelements im wesentlichen 90° beträgt.

6. Drehknopf nach Anspruch 1, **dadurch gekennzeichnet, daß** an dem äußeren Umfang des Zylindermantels (11) des Betätigungselements (10) eine radial umlaufende Ausnehmung (13) vorgesehen ist, die in einen komplementär zu ihr ausgebildeten kreisförmig in einer Gehäuseöffnung einer Gehäuseplatte umlaufenden Vorsprung eingreift.

## Claims

1. Rotary knob comprising an actuating element (10) mounted rotatably in a housing and a coupling element (20, 30) which is connected to said actuating element in a rotationally fixed manner and can be plugged onto a spindle of a switching/control means, the coupling element comprising a first sliding block (20), which is arranged in the actuating element (10) in a manner such that it can be displaced in at least one first radial direction, and a second sliding block (30) which can be connected to the first sliding block, can be displaced in a second radial direction, which is arranged at an angle with respect to the first radial direction, and holds the spindle of the switching/control means, the first sliding block (20) being arranged in the actuating element (10), **characterized in that** the second sliding block (30) is arranged in the first sliding block (20).

2. Rotary knob according to Claim 1, **characterized in that** the actuating element (10) is designed as a hollow cylinder (11) which is open on one side and has two projections (12) on its inner periphery.

3. Rotary knob according to Claim 1 or 2, **characterized in that** the first sliding block (20) is designed as a hollow cylinder (21) which is open on one side and the outside diameter of which is smaller than the inside diameter of the actuating element (10) and in the cylinder casing of which in each case two openings (22, 23; 24, 25) which lie opposite each other enclosing an angle are provided, the two opposite openings of which engage in the projections (12) of the actuating element (10).

4. Rotary knob according to one of the preceding claims, **characterized in that** the second sliding block (30) is designed as cylinder (31), the outside diameter of which is smaller than the inside diameter of the first sliding block (20), having a holder (35) which runs axially for the spindle of the switching/control means and having lugs (32, 33) which are arranged on its outer periphery and engage in two of the openings (22, 23; 24, 25), which lie opposite each other in pairs, of the first sliding element (20).

5. Rotary knob according to one of the preceding claims, **characterized in that** the angle between the respectively opposite openings (22, 23; 24, 25) of the first sliding element is essentially 90°.

6. Rotary knob according to Claim 1, **characterized in that** a radially encircling recess (13) is provided on the outer circumference of the cylinder casing (11) of the actuating element (10) and engages in a projection which is formed in a complementary manner with respect to it and encircles it in a circular manner in a housing opening of a housing plate.

## Revendications

1. Bouton tournant comprenant un élément d'actionnement (10) logé de manière mobile en rotation dans un boîtier, ainsi qu'un élément de couplage (20, 30) relié de manière immobile en rotation à celui-ci et pouvant être emboîté sur un axe d'un moyen de commutation/commande, l'élément de couplage comprenant un premier coulisseau (20) pouvant coulisser dans l'élément d'actionnement (10) au moins dans une première direction radiale, et un deuxième coulisseau (30) pouvant être relié au premier et pouvant coulisser dans une deuxième direction radiale disposée dans un angle par rapport à la première direction radiale et recevant l'axe du moyen de commutation/commande, le premier coulisseau (20) étant disposé dans l'élément d'actionnement (10),
**caractérisé en ce que**
le deuxième coulisseau (30) est disposé dans le premier coulisseau (20).

2. Bouton tournant selon la revendication 1,
**caractérisé en ce que**
l'élément d'actionnement (10) présente la forme d'un cylindre creux (11) ouvert d'un côté, qui présente deux saillies (12) au niveau de sa périphérie intérieure.

3. Bouton tournant selon la revendication 1 ou 2,
**caractérisé en ce que**
le premier coulisseau (20) présente la forme d'un cylindre creux (11) ouvert d'un côté dont le diamètre extérieur est inférieur au diamètre intérieur de l'élément d'actionnement (10), et dans l'enveloppe de cylindre duquel respectivement deux ouvertures (23 ; 24, 25) en regard l'une de l'autre et formant un angle sont prévues, dont deux en regard l'une de l'autre s'engrenant dans les saillies (12) de l'élément d'actionnement (10).

4. Bouton tournant selon l'une quelconque des revendications précédentes,
**caractérisé en ce que**
le deuxième coulisseau (30) présente la forme d'un cylindre (31) dont le diamètre extérieur est inférieur au diamètre intérieur du premier coulisseau (20), comportant un logement (35) s'étendant axialement pour l'axe du moyen de commutation/commande, ainsi que des nez (32, 33) disposés à sa périphérie extérieure, qui s'engrènent dans deux des ouvertures (22, 23 ; 24, 25) du premier coulisseau (20) situées par paires en regard l'une de l'autre.

5. Bouton tournant selon l'une quelconque des revendications précédentes,
**caractérisé en ce que**
l'angle entre les ouvertures (22, 23 ; 24, 25) du premier coulisseau respectivement en regard l'une de l'autre est pour l'essentiel de 90°.

6. Bouton tournant selon la revendication 1,
**caractérisé en ce que**
sur la périphérie extérieure de l'enveloppe de cylindre (11) de l'élément d'actionnement (10) un évidement (13) périphérique radial s'engrène dans une saillie périphérique de forme complémentaire à celui-ci dans un orifice de boîtier d'une plaque de boîtier.
